# EUROPEAN PATENT APPLICATION

(11) **EP 4 785 901 A1**
(43) Date of publication of application: **05.08.2026**
(21) Application number: 26151769.2
(22) Date of filing: 14.01.2026
(51) Int. Cl.: A61C 15/04

(54) **FLOSS TAPE, FLOSS ROLL, AND FLOSS PICK AND METHOD FOR PREPARING SAID FLOSS TAPE**

(30) Priority: 24.01.2025 CN 202510121799
(71) Applicant: Celanese Xingda Filaments Co., Ltd, Wuxi, Jiangsu 214183 (CN)
(72) Inventor: FU, Chengjie, Shanghai, 201210 (CN); XIA, Jingbing, Wuxi, Jiangsu, 214183 (CN)
(74) Representative: v. Bezold & Partner Patentanwälte - PartG mbB

(57) **Abstract**

A floss tape (1), having an elongated strip shape and comprising an inner layer (10) and an outer layer (20) wrapped on the outside of the inner layer (10), characterized in that, the elastic modulus of the inner layer (10) is greater than the elastic modulus of the outer layer (20); the hardness of the inner layer (10) is greater than the hardness of the outer layer (20); a volume of the inner layer (10) in any length direction of the floss tape (1) accounts for 10%-60%, preferably 15%-50%, and more preferably 20%-40% of a total volume of the floss tape (1) in the length direction; the inner layer (10) comprises a mixture of an elastomer and a plastic; the outer layer (20) comprises an elastomer; the elastomer in the inner layer (10) has the same type of repeating structural units as the elastomer in the outer layer (20), and the elastomer in the inner layer (10) is preferably the same as the elastomer in the outer layer (20).

## Description

### Technical Field

The present application relates to the field of dental cleaning tools, and specifically relates to a floss tape, a floss roll composed of the floss tape, and a floss pick composed of the floss tape. The present application also relates to a method for manufacturing the floss tape.

### Background

Existing floss tapes can be made of high-strength polymer multifilament materials (such as nylon 6 fibers or ultra-high molecular weight polyethylene fibers). The individual fibers in such multifilament materials are relatively thin, which easily causes a feel of cutting to the gums. This type of floss tape is also prone to the problem of individual fiber breakage during use, further affecting the user experience. To solve the above problems, some floss tapes are made of soft polymer materials (such as polytetrafluoroethylene or elastomers) to reduce the feel of cutting and breakage problems.

Due to safety concerns regarding per- and polyfluoroalkyl substances, the production of floss tapes made of polytetrafluoroethylene is gradually decreasing. Floss tapes made of elastomers are easily elongated, which creates new problems. Specifically, during the production process of floss rolls and floss picks, the floss tape needs to be pulled out from a spool. For a floss roll, the pulled-out floss tape is then wound onto a core bobbin of the floss roll product. The floss tape made of elastomer is in a stretched state during this process; therefore, when entering the next process, a large residual tension remains on the floss tape. During the process of winding the floss tape onto the core bobbin, these tensions accumulate on the floss tape. Since the length of the floss tape wound on the core bobbin of a floss roll can be as much as 40 meters, the tension accumulated on the floss tape can cause the core bobbin to deform such that it cannot be removed from the winding equipment, or even directly cause the core bobbin to collapse and become unusable. For a floss pick, these tensions cause the floss tape to automatically retract when the floss tape is cut after one cycle of injection molding of the floss pick handle is completed, making it impossible for the equipment to grip it for the next cycle of floss pick handle injection molding production. In this way, the originally continuous automated production process is interrupted.

### Summary of the Invention

In order to solve the above technical problems, the present application proposes a floss tape having a multi-layer structure. Compared with a floss tape of a single-layer structure, the floss tape according to the present application has very small elasticity in the length direction x (the definition of this direction is provided below), so that during the production process of floss rolls and floss picks, production interruption or product defects will not be caused by the accumulated tension on the floss tape. In addition, the floss tape according to the present application is not easily damaged when entering narrow interdental spaces, bringing a better user experience.

The present application proposes a floss tape, which has an elongated strip shape and includes an inner layer and an outer layer wrapped on the outside of the inner layer, characterized in that the elastic modulus of the inner layer is greater than the elastic modulus of the outer layer; the hardness of the inner layer is greater than the hardness of the outer layer; the volume of the inner layer along any length direction of the floss tape accounts for 10%-60%, preferably 15%-50%, and more preferably 20%-40% of the total volume of the floss tape in said length direction; the inner layer comprises a mixture of an elastomer and a plastic; the outer layer comprises an elastomer; the elastomer in the inner layer has the same type of repeating structural units as the elastomer in the outer layer, and the elastomer in the inner layer is preferably the same as the elastomer in the outer layer.

According to an optional embodiment, the outer layer includes a wavy section; the height of the wavy section is in the range of 40 to 200 µm, preferably in the range of 60 to 170 µm, and more preferably in the range of 80 to 150 µm; the width of the wavy section is in the range of 700 to 3000 µm, preferably in the range of 700 to 2000 µm, and more preferably in the range of 1000 to 2000 µm; the thickness of the wavy section is in the range of 20 to 120 µm, preferably in the range of 30 to 90 µm, and more preferably in the range of 40 to 80 µm; the thickness of the wavy section is uniform or non-uniform; in the case where the thickness of the wavy section is non-uniform, the maximum value of the thickness of the wavy section does not exceed 6 times the minimum value, and preferably does not exceed 2 times the minimum value.

According to an optional embodiment, the wavy section includes a first wavy portion; the first wavy portion comprises wavy units sequentially connected, the shape of the wavy units being one or more of a triangle, a circular arc, a sine wave, a rectangle, and other polygons, and having a rounded corner profile at transition portions.

According to an optional embodiment, the first wavy portion includes 2 to 25 wavy units connected sequentially, preferably 5 to 10 wavy units connected sequentially; the wavelength of the wavy units is in the range of 60 to 800 µm, preferably in the range of 100 to 600 µm, and more preferably in the range of 150 to 500 µm; the amplitude of the wavy units is in the range of 0 to 90 µm, preferably in the range of 3 to 80 µm, and more preferably in the range of 5 to 70 µm.

According to an optional embodiment, the wavy section includes a second wavy portion; the second wavy portion comprises secondary wavy units, the shape of the secondary wavy units being one or more of a triangle, a circular arc, a sine wave, a rectangle, and other polygons, and having a rounded corner profile at transition portions.

According to an optional embodiment, the second wavy portion includes one or more secondary wavy units superimposed on each wavy unit of the first wavy portion; the wavelength of the secondary wavy units is in the range of 20 to 600 µm, preferably in the range of 30 to 400 µm, and more preferably in the range of 40 to 200 µm; the amplitude of the secondary wavy units is in the range of 0 to 50 µm, preferably in the range of 1 to 25 µm, and more preferably in the range of 2 to 15 µm; the wavelength of the secondary wavy units is smaller than the wavelength of the wavy units; the amplitude of the secondary wavy units is smaller than the amplitude of the wavy units; the wavelength of the secondary wavy units is greater than 1/20 of the wavelength of the wavy units, preferably greater than 1/10, and more preferably greater than 1/6.

According to an optional embodiment, the maximum thickness of the inner layer is 50 µm; the ratio of the total width to the maximum thickness of the inner layer is greater than 20:1, preferably greater than 30:1; the thickness of the inner layer is uniform or non-uniform, and in the case where the thickness of the inner layer is non-uniform, the thickness of the inner layer varies periodically, and the ratio of the distance over which the inner layer extends in one cycle of thickness variation to the maximum thickness of the inner layer in said one cycle is greater than 5:1, preferably greater than 8:1.

According to an optional embodiment, the floss tape includes one or two guiding sections; the guiding sections are arranged at the edges of the outer layer; the guiding section includes a connecting part close to the outer layer and a guiding part far from the outer layer; the guiding part has a smoothly extending curved surface; the width of the guiding section is in the range of 50 to 550 µm.

According to an optional embodiment, the inner layer comprises one or more of polyamide-based thermoplastic elastomers, polyether-ester thermoplastic elastomers, polyolefin-based thermoplastic elastomers, thermoplastic polyurethane elastomers, and styrene-based block copolymer elastomers, preferably comprises polyamide-based thermoplastic elastomers or polyether-ester thermoplastic elastomers, and more preferably comprises polyether-ester thermoplastic elastomers; the elastomer content in the inner layer is not lower than 20% by weight, preferably not lower than 30% by weight; the outer layer comprises one or more of polyamide-based thermoplastic elastomers, polyether-ester thermoplastic elastomers, polyolefin-based thermoplastic elastomers, thermoplastic polyurethane elastomers, and styrene-based block copolymer elastomers, preferably comprises polyamide-based thermoplastic elastomers or polyether-ester thermoplastic elastomers, and more preferably comprises polyether-ester thermoplastic elastomers; the Shore hardness of the outer layer is lower than 55 HD.

According to an optional embodiment, the plastic in the inner layer comprises one or more of polyamide, olefin polymers, polyesters, polystyrene, acrylonitrile-styrene-butadiene copolymer resin, and thermoplastic polyurethane, preferably comprises polyhexamethylene adipamide, polyhexamethylene sebacamide, polyhexamethylene dodecanediamide, polycaprolactam, polylaurolactam, polyethylene terephthalate, polybutylene terephthalate, or polytrimethylene terephthalate, and more preferably comprises polybutylene terephthalate; the elastic modulus of the plastic in the inner layer is greater than 1 GPa.

The present application also proposes a method for preparing a floss tape, characterized in that the method includes: adding an outer layer composition comprising an elastomer to a first extruder; adding an inner layer composition comprising an elastomer and a plastic to a second extruder; respectively melting the outer layer composition and the inner layer composition to generate a melt of the outer layer composition and a melt of the inner layer composition; sending the melt of the outer layer composition into an outer layer material channel in an extrusion spin pack; entering the melt of the inner layer composition into an inner layer material channel in the extrusion spin pack; merging the melt of the outer layer composition and the melt of the inner layer composition into a composite melt in the extrusion spin pack; extruding the composite melt from spinning holes on a spinneret; drawing the extruded composite melt into cold water for quenching and solidification; sequentially stretching the solidified composite melt into a solid filament in hot water and a dry heat oven; setting the solid filament in another dry heat oven; and winding one or more heat-set solid filaments onto a spool for collection.

According to an optional embodiment, the volume ratio of the inner layer in the floss tape and the thickness of the floss tape are adjusted by adjusting the pump speeds of the first extruder and the second extruder.

The present application also proposes a floss roll, the floss roll comprising a floss roll housing, a floss core bobbin disposed in the floss roll housing, and the floss tape wound on the floss core bobbin.

The present application also proposes a floss pick, the floss pick comprising a floss pick frame, and the floss tape connected between different ends of the floss pick frame.

The floss tape according to the present application has the following technical effects. On the basis that the outer layer has soft characteristics, the plastic material of the inner layer has sufficient strength, which can reduce the elasticity of the floss tape as a whole in the length direction x and the width direction y, so that the floss tape is not easily damaged when entering narrow interdental spaces, bringing a better user experience.

The shape of the outer layer of the floss tape can enhance the cleaning effect of the floss tape. The combination of the inner layer, the outer layer, and the guiding sections of the floss tape makes the sliding resistance of the floss tape uniform and stable during entry into the interdental space. In the case where the width of the interdental space changes suddenly, the frictional force acting on the outer layer will suddenly decrease, leading to a sudden increase in the tensile force acting on the floss tape along the width direction. At this time, the inner layer will maintain the shape of the floss tape so that it will not be flattened due to the tensile force along the width direction, thereby preventing the phenomenon of gum injury caused by a sudden change in the shape of the floss tape due to a sudden change in the width of the interdental space.

The floss tape according to the present application has very small elasticity in the length direction x, so that during the production process of floss rolls and floss picks, production interruption or product defects will not be caused by the accumulated tension on the floss tape.

### Brief Description of the Drawings

The foregoing and other aspects of the present application will be more fully understood from the following detailed description in conjunction with the accompanying drawings. It should be noted that the scales of the drawings may be different for the purpose of clear illustration, but this will not affect the understanding of the present application.
FIG. 1 is a perspective view of a floss tape according to the present application.
FIG. 2 is a cross-sectional view of the floss tape of FIG. 1.
FIG. 3 is a partial enlarged schematic view of the floss tape of FIG. 2.
FIG. 4 is a partial enlarged schematic view of a floss tape according to another embodiment of the present application, showing one wavy unit and a plurality of secondary wavy units superimposed thereon.
FIG. 5 is a partial enlarged schematic view of a floss tape according to another embodiment of the present application, showing one wavy unit and a plurality of secondary wavy units superimposed thereon.
FIG. 6 is a partial enlarged schematic view of a floss tape according to another embodiment of the present application, showing one wavy unit and a plurality of secondary wavy units superimposed thereon.
FIG. 7 is a partial enlarged schematic view of a floss tape according to another embodiment of the present application, showing one wavy unit and a plurality of secondary wavy units superimposed thereon.
FIG. 8 is a partial enlarged schematic view of a floss tape according to another embodiment of the present application, showing two wavy units of the same shape and a plurality of secondary wavy units superimposed thereon.
FIG. 9 is a partial enlarged schematic view of a floss tape according to another embodiment of the present application, showing two wavy units of different shapes and a plurality of secondary wavy units superimposed thereon.
FIG. 10 is a partial enlarged schematic view of a floss tape according to another embodiment of the present application.
FIG. 11 is a flowchart of a method for preparing a floss tape according to the present application.

### Detailed Description

Exemplary embodiments of the present application will be described in more detail below with reference to the accompanying drawings. Although exemplary embodiments of the present application are shown in the drawings, it should be understood that the present application can be implemented in various forms and should not be limited by the embodiments set forth herein. On the contrary, these embodiments are provided to enable a more thorough understanding of the present application and to fully convey the scope of the present application to those skilled in the art.

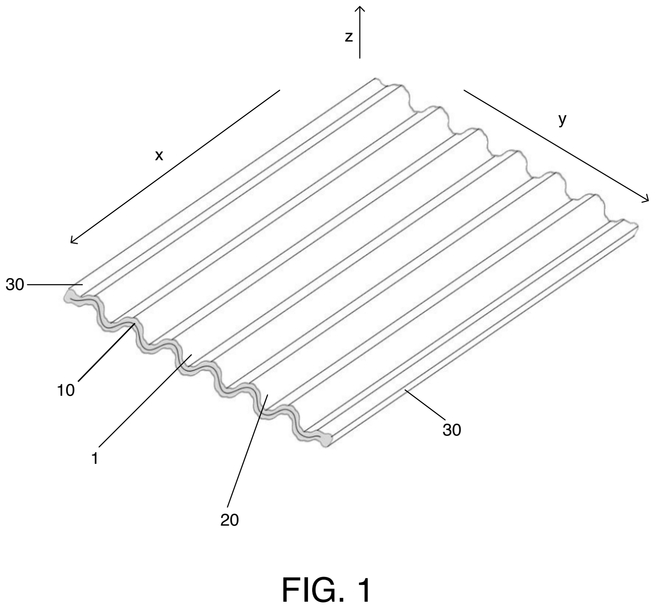

FIG. 1 is a perspective view of a floss tape 1 according to a first embodiment of the present application. Herein, the extending direction of the floss tape 1 is defined as the length direction x (i.e., the arrow direction x in FIG. 1), the direction pointing perpendicularly from one side edge of the floss tape to the other side edge is defined as the width direction y (i.e., the arrow direction y in FIG. 1), and the direction orthogonal to the length direction x and the width direction y is defined as the height direction z (i.e., the arrow direction z in FIG. 1). The floss tape 1 has an elongated strip shape and includes an inner layer 10 and an outer layer 20 wrapped on the outside of the inner layer 10. The outer layer 20 includes a wavy section 21. The floss tape 1 may also include guiding sections 30 arranged at the edges of the outer layer 20. The outer layer 20 may be made of 65% by weight Hytrel^{®} 4068FG (polyether-ester thermoplastic elastomer), 25% by weight Hytrel^{®} 5556 (polyether-ester thermoplastic elastomer), 5% by weight Multibase^{™} MB50-010 (a DuPont's lubricant masterbatch based on polyether-ester thermoplastic elastomer), and 5% by weight of a white color masterbatch based on polyether-ester thermoplastic elastomer Hytrel^{®} 4068FG.

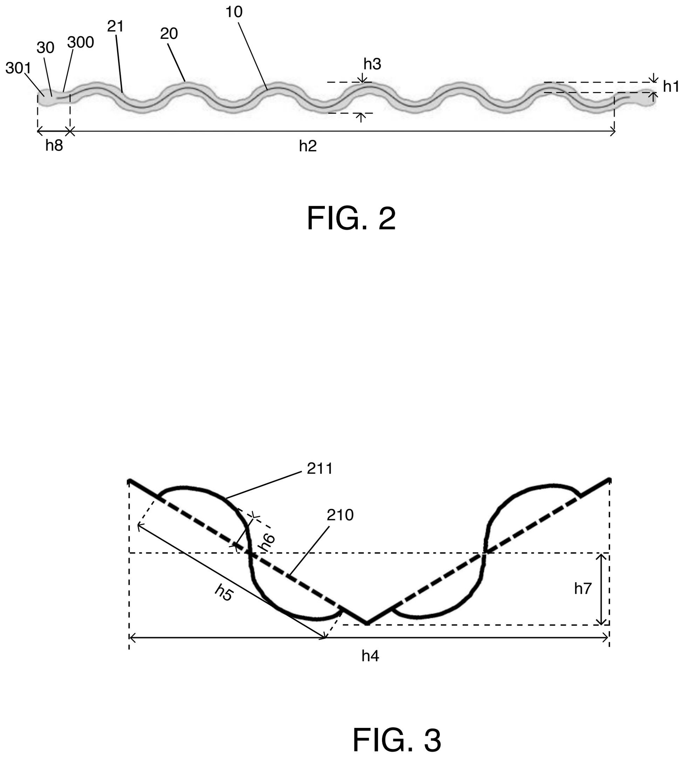

FIG. 2 is a cross-sectional view of the floss tape 1 of FIG. 1. The maximum thickness of the inner layer 10 is 50 µm. The ratio of the total width to the maximum thickness of the inner layer 10 is greater than 20:1, preferably greater than 30:1. The inner layer 10 is wave-shaped (undulating along the width direction y), and both the elastic modulus and hardness are higher than those of the outer layer 20.

The inner layer 10 may comprise one or more of polyamide-based thermoplastic elastomers, polyether-ester thermoplastic elastomers, polyolefin-based thermoplastic elastomers, thermoplastic polyurethane elastomers, and styrene-based block copolymer elastomers, preferably comprises polyamide-based thermoplastic elastomers or polyether-ester thermoplastic elastomers, and more preferably comprises polyether-ester thermoplastic elastomers. The polyether-ester thermoplastic elastomer may be a commercially available product, such as Hytrel^{®} resins from Celanese, more specifically such as Hytrel^{®} 4068FG, Hytrel^{®} 5556, Hytrel^{®} SC956, Hytrel^{®} SC969, Hytrel^{®} SC976, and Hytrel^{®} SC988.

The elastomer content in the inner layer 10 is not lower than 20% by weight, preferably not lower than 30% by weight. In addition, the elastomer of the inner layer 10 has the same type of repeating structural units as the elastomer of the outer layer 20. The elastomer in the inner layer 10 is preferably the same as the elastomer in the outer layer 20. In other words, the repeating structural units of the elastomer long-chain molecules constituting the inner layer 10 have the same functional groups as the repeating structural units of the elastomer long-chain molecules constituting the outer layer 20. For example, if the elastomer in the outer layer 20 is a polyether-ester thermoplastic elastomer, and the repeating structural units of its long-chain molecules comprise ester groups and ether groups, then the elastomer in the inner layer 10 is also a polyether-ester thermoplastic elastomer, and the repeating structural units of its long-chain molecules also comprise ester groups and ether groups. The number of ester groups and ether groups in the two cases does not need to be exactly the same, and the non-functional group structures between the ester groups and ether groups can also be different. Functional groups refer to a class of atoms or groups of atoms in organic molecules that impart specific chemical properties to the compound. They are usually composed of specific arrangements of atoms or bonds and are the core structural units that determine the chemical reactivity and physical properties of the compound. That the elastomer in the inner layer 10 is the same as the elastomer in the outer layer 20 means that the repeating structural units of the long-chain molecules of the two elastomers not only comprise the same functional groups, but also the number of functional groups in the two cases is the same, and the non-functional group structures between the functional groups are the same. For polymer materials, "the number of functional groups is the same" and "the structure is the same" referred to here mean the same in a statistical sense, and the actual number of functional groups and the non-functional group structures between functional groups can allow for statistical deviations. For example, the elastomer in the inner layer 10 and the elastomer in the outer layer 20 are resins of the same grade from the same manufacturer but from different production batches.

Specifically, the inner layer 10 comprises a mixture of an elastomer and a plastic. The elastic modulus of the plastic in the inner layer 10 is greater than 1 GPa. The plastic in the inner layer 10 may comprise one or more of PA (polyamide), olefin polymers, polyesters, polystyrene, ABS (acrylonitrile-styrene-butadiene copolymer), and TPU (thermoplastic polyurethane), and optionally present thermoplastic elastomers. Preferably, the plastic in the inner layer 10 may comprise nylon 66 (polyhexamethylene adipamide), nylon 610 (polyhexamethylene sebacamide), nylon 612 (polyhexamethylene dodecanediamide), nylon 6 (polycaprolactam), nylon 12 (polylaurolactam), PET (polyethylene terephthalate), PBT (polybutylene terephthalate), or PTT (polytrimethylene terephthalate). More preferably, the plastic in the inner layer 10 may comprise PBT. The PBT may be a commercially available product, such as DHKD03 from Shinkong Synthetic Fibers Corp., PBT B2520 from BASF, PBT L2100 from Sinopec Yizheng Chemical Fibre, PBT 1200 211D/211M from Chang Chun Plastics, spinning grade PBT from Hengli Chemical Fibre, etc.

It can be understood that the inner layer 10 may be flat. In addition, the volume of the inner layer 10 along any length direction of the floss tape 1 accounts for 10%-60%, preferably 15%-50%, and more preferably 20%-40% of the total volume of the floss tape 1 in that length direction.

The outer layer 20 may comprise one or more of polyamide-based thermoplastic elastomers, polyether-ester thermoplastic elastomers, polyolefin-based thermoplastic elastomers, thermoplastic polyurethane elastomers, and styrene-based block copolymer elastomers. Preferably, the outer layer 20 may comprise polyamide-based thermoplastic elastomers or polyether-ester thermoplastic elastomers. More preferably, the outer layer 20 may comprise polyether-ester thermoplastic elastomers.

Specifically, the Shore hardness of the outer layer 20 is lower than 55 HD.

In this way, while maintaining the soft characteristics of the outer layer 20, the floss tape 1 according to the present application uses the plastic material of the inner layer 10 to reduce the elasticity of the floss tape as a whole in the length direction x, so that during the production process of floss rolls and floss picks, production interruption or product defects will not be caused by the accumulated tension on the floss tape. At the same time, the inner layer 10 has sufficient strength, so that the floss tape is not easily damaged when entering narrow interdental spaces, bringing a better user experience.

The material constituting the guiding sections 30 may be the same as that of the outer layer 20.

The thickness h₁ of the wavy section 21 of the outer layer 20 is 70 µm, the height h₃ is 100 µm, and the width h₂ is 1600 µm.

The guiding sections 30 are disposed at the edges of the wavy section 21 and include a connecting part 300 close to the wavy section 21 and a guiding part 301 far from the wavy section 21. The width h₈ of the guiding section 30 is about 120 µm. The guiding part 301 has a smoothly extending curved surface.

FIG. 3 is a partial enlarged schematic view of the floss tape 1 of FIG. 2. For the sake of clarity, the inner layer 10 is omitted, and the outer layer 20 is simplified as a line segment (although it actually has a certain thickness) to facilitate the description of its shape. The wavy section 21 of the outer layer 20 includes a first wavy portion 210 and a second wavy portion 211. The first wavy portion 210 includes a plurality of wavy units connected sequentially (one wavy unit is shown in the figure). The shape of the wavy unit is a triangle. The second wavy portion 211 includes one or more secondary wavy units superimposed on the wavy unit of the first wavy portion 210 (two secondary wavy units are shown in the figure). The shape of the secondary wavy unit is a sine wave. Specifically, one secondary wavy unit is superimposed on half of a wavy unit. The wavelength h₄ of the wavy unit is greater than the wavelength h₈ of the secondary wavy unit. The amplitude h₇ of each wavy unit of the first wavy portion 210 is greater than the amplitude h₆ of each secondary wavy unit of the second wavy portion 211. Specifically, the wavelength h₄ of the wavy unit is about 260 µm, the amplitude h₇ is about 15 µm, and it has a rounded corner profile at the transition. The wavelength h₅ of the secondary wavy unit is about 168 µm, and the amplitude h₆ is about 6 µm.

Forming the wavy section 21 by superimposing the first wavy portion 210 and the second wavy portion 211 can increase the roughness and cleaning power of the floss tape without affecting the compressibility and the ability of the floss tape to enter interdental spaces. The wavelength h₄ and amplitude h₇ of the wavy units of the first wavy portion 210 are larger and constitute the basic structure of the wavy section 21 to impart good compressibility and the ability to enter interdental spaces to the floss tape. The wavelength h₅ and amplitude h₆ of the secondary wavy units of the second wavy portion 211 are smaller, mainly serving to increase the surface roughness of the floss tape, which can improve the cleaning power of the floss tape.

It can be understood that, in order to achieve the above technical effects, the traveling direction of the secondary wavy units of the second wavy portion 211 changes along with the contour direction of the first wavy portion 210.

It can be understood that, in order to achieve the above technical effects, the thickness of the wavy section 21 may be uniform or non-uniform. In the latter case, the maximum value of the thickness of the wavy section 21 does not exceed 6 times the minimum value, and preferably does not exceed 2 times. The thickness h₁ of the wavy section 21 may be in the range of 20 to 120 µm, preferably in the range of 30 to 90 µm, and more preferably in the range of 40 to 80 µm. The width h₂ of the wavy section 21 may be in the range of 700 to 3000 µm, preferably in the range of 700 to 2000 µm, and more preferably in the range of 1000 to 2000 µm. The height h₃ of the wavy section 21 may be in the range of 40 to 200 µm, preferably in the range of 60 to 170 µm, and more preferably in the range of 80 to 150 µm.

It can be understood that regardless of whether the thickness of the wavy section 21 is uniform, the thickness of the inner layer 10 may be non-uniform.

It can be understood that, in order to achieve the above technical effects, the first wavy portion 210 of the wavy section 21 may have 2 to 25 wavy units, preferably 5 to 10 wavy units. The wavelength h₄ of the wavy units of the first wavy portion 210 of the wavy section 21 may be in the range of 60 to 800 µm, preferably in the range of 100 to 600 µm, and more preferably in the range of 150 to 500 µm. The amplitude h₇ of the wavy units of the first wavy portion 210 of the wavy section 21 may be in the range of 0 to 90 µm, preferably in the range of 3 to 80 µm, and more preferably in the range of 5 to 70 µm.

It can be understood that, in order to achieve the above technical effects, the wavelength h₅ of the secondary wavy units of the second wavy portion 211 of the wavy section 21 may be in the range of 20 to 600 µm, preferably in the range of 30 to 400 µm, and more preferably in the range of 40 to 200 µm. The amplitude h₆ of the secondary wavy units of the second wavy portion 211 of the wavy section 21 may be in the range of 0 to 50 µm, preferably in the range of 1 to 25 µm, and more preferably in the range of 2 to 15 µm.

It can be understood that, in order to achieve the above technical effects, the wavelength h₅ of the secondary wavy unit is greater than 1/20 of the wavelength h₄ of the wavy unit, preferably greater than 1/10, and more preferably greater than 1/6.

It can be understood that, although not shown in the figures, the floss tape according to the present application may also include a coating applied on its surface. The coating may be made of the following substances: lubricants, release agents, abrasives, whiteners, active agents, olfactory stimulants, sialagogues, sensory stimulants, essential oils, fragrances, antibacterial agents, or antiviral agents.

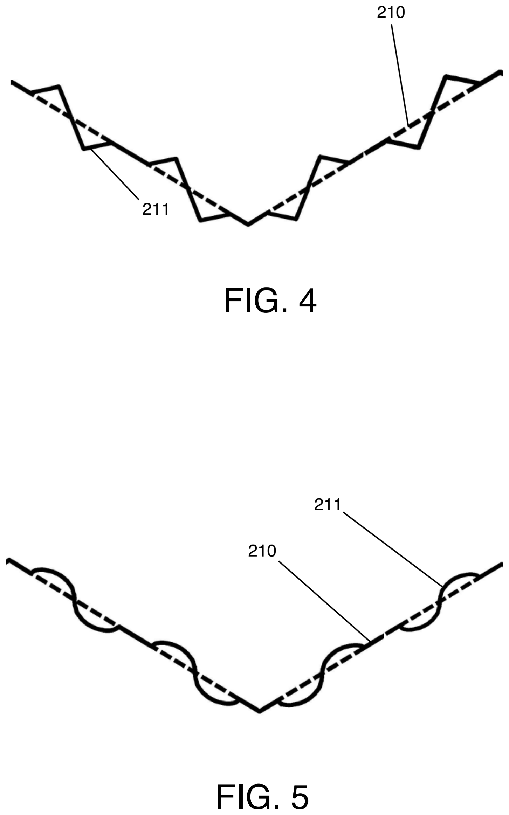

FIG. 4 is a partial enlarged schematic view of a floss tape 1 according to another embodiment of the present application. For the sake of clarity, the inner layer 10 is omitted, and the outer layer 20 is simplified as a line segment (although it actually has a certain thickness) to facilitate the description of its shape. Compared with

FIG. 3, the shape of the wavy unit of the first wavy portion 210 in FIG. 4 is still a triangle, while the shape of the secondary wavy units of the second wavy portion 211 also becomes a triangle, and two secondary wavy units are superimposed on half of a wavy unit.

FIG. 5 is a partial enlarged schematic view of a floss tape 1 according to another embodiment of the present application. For the sake of clarity, the inner layer 10 is omitted, and the outer layer 20 is simplified as a line segment (although it actually has a certain thickness) to facilitate the description of its shape. Compared with

FIG. 3, the shape of the wavy unit of the first wavy portion 210 in FIG. 5 is still a triangle, while the shape of the secondary wavy units of the second wavy portion 211 becomes a sine wave, and two secondary wavy units are superimposed on half of a wavy unit.

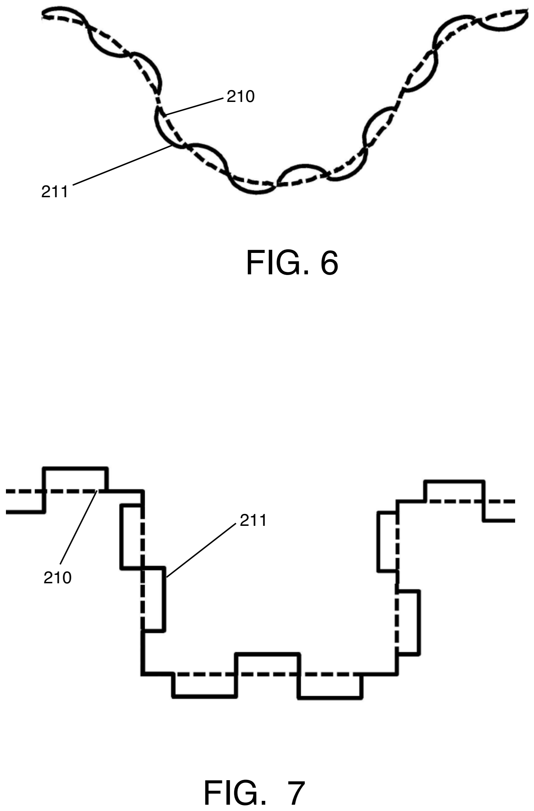

FIG. 6 is a partial enlarged schematic view of a floss tape 1 according to another embodiment of the present application. For the sake of clarity, the inner layer 10 is omitted, and the outer layer 20 is simplified as a line segment (although it actually has a certain thickness) to facilitate the description of its shape. Compared with FIG. 3, the shape of the wavy unit of the first wavy portion 210 in FIG. 6 becomes a sine wave, and the shape of the secondary wavy units of the second wavy portion 211 is still a sine wave, but three secondary wavy units are superimposed on half of a wavy unit.

FIG. 7 is a partial enlarged schematic view of a floss tape 1 according to another embodiment of the present application. For the sake of clarity, the inner layer 10 is omitted, and the outer layer 20 is simplified as a line segment (although it actually has a certain thickness) to facilitate the description of its shape. Compared with FIG. 3, the shape of the wavy unit of the first wavy portion 210 in FIG. 7 becomes a rectangle, and the shape of the secondary wavy units of the second wavy portion 211 also becomes a rectangle, and 2.5 secondary wavy units are superimposed on half of a wavy unit.

It can be understood that, in order to achieve the above technical effects, the first wavy portion 210 having wavy units of the above shapes (such as triangle, circular arc, sine wave, rectangle, other polygons, etc.) and the second wavy portion 211 having secondary wavy units of the above shapes (such as triangle, circular arc, sine wave, rectangle, other polygons, etc.) can be combined arbitrarily, all of which are within the protection scope of the present application.

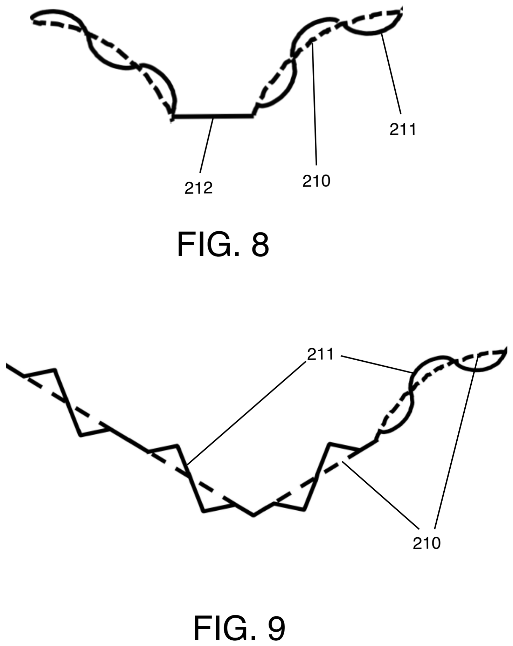

FIG. 8 is a partial enlarged schematic view of a floss tape 1 according to another embodiment of the present application. For the sake of clarity, the inner layer 10 is omitted, and the outer layer 20 is simplified as a line segment (although it actually has a certain thickness) to facilitate the description of its shape. Compared with FIG. 3, the shape of the wavy unit of the first wavy portion 210 in FIG. 8 becomes a circular arc, while the shape of the secondary wavy units of the second wavy portion 211 becomes a sine wave. In addition, a straight section 212 is connected between two wavy units of the first wavy portion 210 in FIG. 8.

FIG. 9 is a partial enlarged schematic view of a floss tape 1 according to another embodiment of the present application. For the sake of clarity, the inner layer 10 is omitted, and the outer layer 20 is simplified as a line segment (although it actually has a certain thickness) to facilitate the description of its shape. Compared with FIG. 8, the first wavy portion 210 in FIG. 9 is formed by sequentially connecting a triangle-shaped wavy unit and a sine-wave-shaped wavy unit. For the second wavy portion 211, the shape of the secondary wavy units superimposed on the triangle-shaped wavy unit is a triangle, while the shape of the secondary wavy units superimposed on the sine-wave-shaped wavy unit is a sine wave. In addition, no straight section 212 is provided between the first wavy portions 210 in FIG. 9.

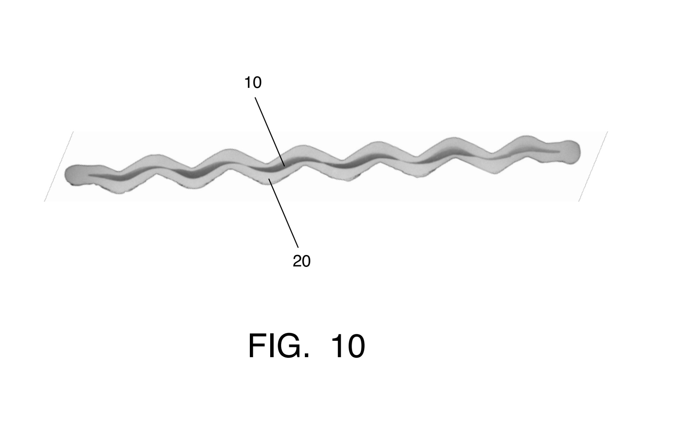

FIG. 10 is a partial enlarged schematic view of a floss tape according to another embodiment of the present application. In the embodiment of FIG. 10, the thickness of the inner layer 10 is non-uniform.

The process of the floss tape entering an interdental space is described below based on the embodiments of the present application. When the floss tape 1 slides on the occlusal surface of teeth, the guiding section 30 of the floss tape 1 will snap into the interdental space opening, thereby generating feedback to the object pulling the floss tape (such as a hand, a floss roll, or a floss pick). In this way, the user of the floss tape 1 can clearly perceive the position of the floss tape 1 and then change the direction of the force applied to the floss tape 1. After the direction of the force applied to the floss tape 1 is changed from being parallel to the occlusal surface of the teeth to being perpendicular to the occlusal surface of the teeth, the floss tape 1 reciprocates on the interdental space opening under the action of the combined force, so that the outer layer 20 extends from the interdental space opening into the interdental space along the width direction y. When the floss tape 1 reciprocates along the width direction y in the interdental space, the wavy section 21 of the outer layer 20 contacts the surface of the interdental space, so that food residues in the interdental space and dental plaque on the tooth surface are squeezed into the grooves formed by the first wavy portion 210 and the second wavy portion 211 of the wavy section 21 together, thereby being brought out of the interdental space along with the movement of the floss tape.

The floss tape according to the present application has the following technical effects. On the basis that the outer layer 20 has soft characteristics, the plastic material of the inner layer 10 has sufficient strength, which can reduce the elasticity of the floss tape as a whole in the length direction x and the width direction y, so that the floss tape is not easily damaged when entering narrow interdental spaces, bringing a better user experience.

The shape of the outer layer 20 of the floss tape 1 can enhance the cleaning effect of the floss tape 1. The combination of the inner layer 10, the outer layer 20, and the guiding sections 30 of the floss tape 1 makes the sliding resistance of the floss tape 1 uniform and stable during entry into the interdental space. In the case where the width of the interdental space changes suddenly, the frictional force acting on the outer layer 20 will suddenly decrease, leading to a sudden increase in the tensile force acting on the floss tape 1 along the width direction y. At this time, the inner layer 10 will maintain the shape of the floss tape 1 so that it will not be flattened due to the tensile force along the width direction y, thereby preventing the phenomenon of gum injury caused by a sudden change in the shape of the floss tape 1 due to a sudden change in the width of the interdental space.

The present application also includes a floss roll composed of the floss tape 1 and a floss pick composed of the floss tape. The floss tape 1 according to the present application has very small elasticity in the length direction x, so that during the production process of floss rolls and floss picks, production interruption or product defects will not be caused by the accumulated tension on the floss tape 1.

Experiments on the damage rate of the floss tape when passing through a simulated interdental space are described below, comprising the following steps:
Step 1: Fix the two ends of the floss tape respectively on the two arms of a bow-shaped fixture, so that the length of the floss tape between the two fixing points is about 4 cm;
Step 2: Connect the fixture to a handheld handle;
Step 3: Adjust the gap between the two round heads of a double-round-head micrometer to 30 µm, use the gap between the two round heads as a simulated interdental space, and fix the micrometer on a table;
Step 4: Hold the handle with one hand and apply force vertically downward on the floss tape fixed on the fixture to make the floss tape pass through the gap between the two round heads of the micrometer;
Step 5: Hold the handle with one hand and apply tensile force vertically upward on the floss tape that has passed through the gap, selecting a different area of the floss tape from that used in Step 4 to pass through the gap between the two round heads of the micrometer;
Step 6: Record whether the floss tape is damaged.

Replace with a new floss tape sample and repeat the above test six times to calculate the probability of damage occurring when the floss tape passes through the gap between the two round heads of the micrometer, i.e., the damage rate.

Experiments for evaluating the tensile breaking force and the elongation of floss tape at 1 Newton tensile force are described below, comprising the following steps:
Step 1: Install a pneumatic cord and yarn grip on an Instron 5965 universal material testing machine and zero the load;
Step 2: Take a floss tape more than 30 cm long, install it on the pneumatic cord and yarn grip, control the effective sample length to 20 cm, and zero the displacement;
Step 3: Stretch the floss tape at a speed of 10 inches/minute until it breaks.
Step 4: Record the load when the floss tape breaks, and the elongation of the floss tape when the tensile load is 1 Newton.

Replace with a new floss tape sample and repeat the above test ten times to calculate the average load when the floss tape breaks, i.e., the tensile breaking force. Calculate the average elongation of the floss tape under a 1 Newton tensile load, i.e., the elongation under 1 Newton tension. The elongation under 1 Newton tension can indicate the magnitude of the elasticity of the floss tape. The higher the elongation under 1 Newton tension, the greater the elasticity of the floss tape.

Experiments were conducted on the floss tape of the above embodiment (i.e., Example 1 in the table below) and compared with other floss tapes in the prior art. The results are shown in Tables 1-3 below.

**Table 1 Test results of various floss tapes**

| | **Multi-layer structure** | **Inner layer volume ratio (%)** | **Outer layer material** | **Inner layer material** | **Tensile breaking force (N)** | **Damage rate** | **1 Newton elongation** |
|---|---|---|---|---|---|---|---|
| Comparative Example 1 | No | 0 | Hytrel^{®} 4068FG; Hytrel^{®} 5556; Multibase^{™} MB50-010; White masterbatch; 65/25/5/5 | None | 20.1 | 1/6 | 5.2 |
| Comparative Example 2 | Yes | 20 | Hytrel^{®} 4068FG; Hytrel^{®} 5556; Multibase^{™} MB50-010; White masterbatch; 65/25/5/5 | DHKD03 | 23.1 | 4/6 | 0.6 |
| Comparative Example 3 | Yes | 30 | Hytrel^{®} 4068FG; Hytrel^{®} 5556; Multibase^{™} MB50-010; White masterbatch; 65/25/5/5 | DHKD03 | 27.1 | 4/6 | 0.5 |
| Comparative Example 4 | Yes | 40 | Hytrel^{®} 4068FG; Hytrel^{®} 5556; Multibase^{™} MB50-010; White masterbatch; 65/25/5/5 | DHKD03 | 32.5 | 5/6 | 0.4 |
| Example 1 | Yes | 20 | Hytrel^{®} 4068FG; Hytrel^{®} 5556; Multibase^{™} MB50-010; White masterbatch; 65/25/5/5 | DHKD03; Hytrel^{®} 5556 (70/30) | 21.4 | 2/6 | 1.1 |
| Example 2 | Yes | 30 | Hytrel^{®} 4068FG; Hytrel^{®} 5556; Multibase^{™} MB50-010; White masterbatch; 65/25/5/5 | DHKD03; Hytrel^{®} 5556 (70/30) | 26.2 | 1/6 | 0.6 |
| Example 3 | Yes | 50 | Hytrel^{®} 4068FG; Hytrel^{®} 5556; Multibase^{™} MB50-010; White masterbatch; 65/25/5/5 | DHKD03; Hytrel^{®} 5556 (70/30) | 35.6 | 2/6 | 0.4 |

The formulations of the outer layer material and the inner layer material in Table 1 are weight ratios. For example, 65/25/5/5 indicates that the percentage of the four components are 65% by weight, 25% by weight, 5% by weight, and 5% by weight, respectively.

**Table 2 Dimensions of various floss tapes**

| | **Wavy section height (µm)** | **Wavy section width (µm)** | **Wavy section thickness (µm)** | **Guiding section width (µm)** | **Total width (µm)** |
|---|---|---|---|---|---|
| Comparative Example 1 | 100 | 1637 | 72 | 78 | 1774 |
| Comparative Example 2 | 129 | 1530 | 70 | 120 | 1767 |
| Comparative Example 3 | 122 | 1547 | 69 | 111 | 1783 |
| Comparative Example 4 | 142 | 1568 | 80 | 117 | 1800 |
| Example 1 | 130 | 1585 | 75 | 120 | 1822 |
| Example 2 | 149 | 1522 | 73 | 117 | 1744 |
| Example 3 | 129 | 1543 | 70 | 111 | 1763 |

**Table 3 Dimensions of various floss tapes**

| | **Waveform** | **Number of wavy units** | **Wavy unit wavelength (µm)** | **Wavy unit amplitude (µm)** | **Inner layer maximum thickness (µm)** | **Ratio of inner layer total width to maximum thickness** | **Ratio of inner layer unit width to maximum thickness** |
|---|---|---|---|---|---|---|---|
| Comparative Example 1 | Circular arc Composite wave | 6 (12) | 273 (105) | 14 (6) | Not applicable | Not applicable | Not applicable |
| Comparative Example 2 | Triangle | 6 | 253 | 30 | 28 | 58 | 10 |
| Comparative Example 3 | Triangle | 6 | 267 | 27 | 35 | 47 | 8 |
| Comparative Example 4 | Triangle | 6 | 264 | 31 | 41 | 41 | 7 |
| Example 1 | Triangle | 6 | 277 | 28 | 25 | 67 | 11 |
| Example 2 | Triangle | 6 | 270 | 38 | 40 | 42 | 7 |
| Example 3 | Triangle | 6 | 258 | 30 | 48 | 35 | 6 |

The numbers in parentheses in Table 3 are the parameters of the secondary wavy units of Comparative Example 1. Herein, when the thickness of the inner layer varies periodically, "inner layer unit width" specifically refers to the distance over which the inner layer extends in one cycle of thickness variation.

In Table 1, "damage rate" refers to the ratio of the number of times the floss tape is damaged after entering and exiting the simulated interdental space to the total number of times it enters and exits the interdental space.

In Table 1, "1 Newton elongation " refers to the ratio of the elongated length of the floss tape when subjected to a 1 Newton force to the original length.

As can be seen from Table 1, when the inner layer comprises PBT, the elongation under 1 Newton elongation of the floss tape is significantly reduced compared to the inner layer not comprising PBT, i.e., the elasticity of the monofilament is reduced. When the inner layer comprises only PBT and does not comprise polyester or polyether-ester thermoplastic elastomers, the damage rate of the floss tape is relatively high. After adding polyester or polyether-ester thermoplastic elastomers to the inner layer, the damage rate of the floss tape can be significantly reduced. From the tensile breaking force of the floss tape, it can be seen that the reduction in the damage rate of the floss tape is not caused by an increase in the tensile breaking force of the floss tape.

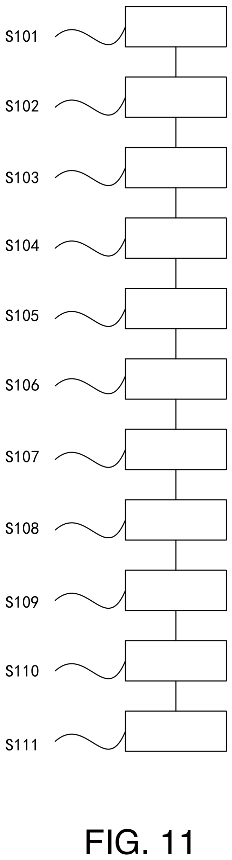

FIG. 11 is a flowchart of a method for preparing a floss tape according to the present application. The method includes the following steps:
S101: Adding an outer layer composition comprising an elastomer to a first extruder;
S102: Adding an inner layer composition comprising an elastomer and a plastic to a second extruder;
S103: Respectively melting the outer layer composition and the inner layer composition to generate a melt of the outer layer composition and a melt of the inner layer composition;
S104: Sending the melt of the outer layer composition into an outer layer material channel in an extrusion spin pack;
S105: Entering the melt of the inner layer composition into an inner layer material channel in the extrusion spin pack;
S106: Merging the melt of the outer layer composition and the melt of the inner layer composition into a composite melt in the extrusion spin pack;
S107: Extruding the composite melt from spinning holes on a spinneret;
S108: Drawing the extruded composite melt into cold water for quenching and solidification;
S109: Sequentially stretching the solidified composite melt into a solid filament in hot water and a dry heat oven;
S110: Setting the solid filament in another dry heat oven;
S111: Winding one or more heat-set solid filaments onto a spool for collection.

In the above method, the volume ratio of the inner layer in the floss tape and the thickness of the floss tape are adjusted by adjusting the pump speeds of the first extruder and the second extruder.

In the above method, the extending direction of the solid filament is the length direction x defined herein.

The foregoing description of the embodiments has been provided for purposes of illustration and description. It is not intended to be exhaustive or to limit the embodiments to the precise forms disclosed. Many modifications and variations will be apparent to those skilled in the art. These embodiments were chosen and described in order to best explain the principles and practical applications, thereby enabling others skilled in the art to understand the various embodiments and various modifications as are suited to the particular use contemplated. Within the framework of the embodiments, the components and features described above can be combined between the different embodiments described.

## Claims

1. A floss tape (1), having an elongated strip shape and comprising an inner layer (10) and an outer layer (20) wrapped on the outside of the inner layer (10),
**characterized in that**,
the elastic modulus of the inner layer (10) is greater than the elastic modulus of the outer layer (20);
the hardness of the inner layer (10) is greater than the hardness of the outer layer (20);
a volume of the inner layer (10) in any length direction of the floss tape (1) accounts for 10%-60%, preferably 15%-50%, and more preferably 20%-40% of a total volume of the floss tape (1) in the length direction;
the inner layer (10) comprises a mixture of an elastomer and a plastic;
the outer layer (20) comprises an elastomer;
the elastomer in the inner layer (10) has the same type of repeating structural units as the elastomer in the outer layer (20), and the elastomer in the inner layer (10) is preferably the same as the elastomer in the outer layer (20).

2. The floss tape (1) according to claim 1, wherein,
the outer layer (20) comprises a wavy section (21);
the height of the wavy section (21) is in a range of 40 to 200 µm, preferably in a range of 60 to 170 µm, and more preferably in a range of 80 to 150 µm;
the width of the wavy section (21) is in a range of 700 to 3000 µm, preferably in a range of 700 to 2000 µm, and more preferably in a range of 1000 to 2000 µm;
the thickness of the wavy section (21) is in a range of 20 to 120 µm, preferably in a range of 30 to 90 µm, and more preferably in a range of 40 to 80 µm;
the thickness of the wavy section (21) is uniform or non-uniform;
in a case where the thickness of the wavy section (21) is non-uniform, a maximum value of the thickness of the wavy section (21) does not exceed 6 times a minimum value thereof, and preferably does not exceed 2 times the minimum value.

3. The floss tape (1) according to claim 1 or 2, wherein,
the wavy section (21) comprises a first wavy portion (210);
the first wavy portion (210) comprises wavy units sequentially connected and having a shape of one or more of a triangle, a circular arc, a sine wave, a rectangle, and other polygons, and has a rounded corner profile at a turning portion.

4. The floss tape (1) according to claim 3, wherein,
the first wavy portion (210) comprises 2 to 25 sequentially connected wavy units, and preferably comprises 5 to 10 sequentially connected wavy units;
the wavelength of the wavy units is in a range of 60 to 800 µm, preferably in a range of 100 to 600 µm, and more preferably in a range of 150 to 500 µm;
an amplitude of the wavy units is in a range of 0 to 90 µm, preferably in a range of 3 to 80 µm, and more preferably in a range of 5 to 70 µm.

5. The floss tape (1) according to claim 4, wherein,
the wavy section (21) comprises a second wavy portion (211);
the second wavy portion (211) comprises secondary wavy units having a shape of one or more of a triangle,
a circular arc, a sine wave, a rectangle, and other polygons, and has a rounded corner profile at a turning portion.

6. The floss tape (1) according to claim 5, wherein,
the second wavy portion (211) comprises one or more secondary wavy units superimposed on each wavy unit of the first wavy portion (210);
the wavelength of the secondary wavy units is in a range of 20 to 600 µm, preferably in a range of 30 to 400 µm, and more preferably in a range of 40 to 200 µm;
an amplitude of the secondary wavy units is in a range of 0 to 50 µm, preferably in a range of 1 to 25 µm, and more preferably in a range of 2 to 15 µm;
the wavelength of the secondary wavy units is smaller than the wavelength of the wavy units;
the amplitude of the secondary wavy units is smaller than the amplitude of the wavy units;
the wavelength of the secondary wavy units is greater than 1/20 of the wavelength of the wavy units, preferably greater than 1/10, and more preferably greater than 1/6.

7. The floss tape (1) according to claim 1, wherein,
the maximum thickness of the inner layer (10) is 50 µm;
a ratio of a total width to the maximum thickness of the inner layer (10) is greater than 20:1, and preferably greater than 30:1;
the thickness of the inner layer (10) is uniform.

8. The floss tape (1) according to claim 1, wherein,
the maximum thickness of the inner layer (10) is 50 µm;
a ratio of a total width to the maximum thickness of the inner layer (10) is greater than 20:1, and preferably greater than 30:1;
the thickness of the inner layer (10) is non-uniform.

9. The floss tape (1) according to claim 8, wherein,
the thickness of the inner layer (10) varies periodically,
a ratio of a distance over which the inner layer (10) extends in one cycle of thickness variation to the maximum thickness of the inner layer (10) in the one cycle is greater than 5:1, and preferably greater than 8:1.

10. The floss tape (1) according to claim 1, wherein,
the floss tape (1) comprises one or two guiding sections (30);
the guiding sections (30) are arranged at edges of the outer layer (20);
the guiding section (30) comprises a connecting part (300) close to the outer layer (20) and a guiding part (301) far from the outer layer (20);
the guiding part (301) has a smoothly extending curved surface;
the width of the guiding section (30) is in a range of 50 to 550 µm.

11. The floss tape (1) according to claim 1, wherein,
the inner layer (10) comprises one or more of a polyamide-based thermoplastic elastomer, a polyether-ester thermoplastic elastomer, a polyolefin-based thermoplastic elastomer, a thermoplastic polyurethane elastomer, and a styrene-based block copolymer elastomer, preferably comprises a polyamide-based thermoplastic elastomer or a polyether-ester thermoplastic elastomer, and more preferably comprises a polyether-ester thermoplastic elastomer;
an elastomer content in the inner layer (10) is not lower than 20% by weight, and preferably not lower than 30% by weight;
the outer layer (20) comprises one or more of a polyamide-based thermoplastic elastomer, a polyether-ester thermoplastic elastomer, a polyolefin-based thermoplastic elastomer, a thermoplastic polyurethane elastomer, and a styrene-based block copolymer elastomer, preferably comprises a polyamide-based thermoplastic elastomer or a polyether-ester thermoplastic elastomer, and more preferably comprises a polyether-ester thermoplastic elastomer;
a Shore hardness of the outer layer (20) is lower than 55 HD.

12. The floss tape (1) according to claim 11, wherein the plastic in the inner layer (10) comprises one or more of polyamide, olefin-based polymer, polyester-based polymer, polystyrene, acrylonitrile-styrene-butadiene copolymer resin, and thermoplastic polyurethane, preferably comprises polyhexamethylene adipamide, polyhexamethylene sebacamide, polyhexamethylene dodecanediamide, polycaprolactam, polylaurolactam, polyethylene terephthalate, polybutylene terephthalate, or polytrimethylene terephthalate, and more preferably comprises polybutylene terephthalate;
the elastic modulus of the plastic in the inner layer (10) is greater than 1 GPa.

13. A method for preparing the floss tape according to any one of claims 1-12, **characterized in that** the method comprises:
adding an outer layer composition comprising an elastomer into a first extruder;
adding an inner layer composition comprising an elastomer and a plastic into a second extruder;
respectively melting the outer layer composition and the inner layer composition to generate a melt of the outer layer composition and a melt of the inner layer composition;
feeding the melt of the outer layer composition into an outer layer material channel in an extrusion spin pack;
feeding the melt of the inner layer composition into an inner layer material channel in the extrusion spin pack;
merging the melt of the outer layer composition and the melt of the inner layer composition into a composite melt in the extrusion spin pack;
extruding the composite melt from a spinning hole on a spinneret;
drawing the extruded composite melt into cold water for quenching and solidification;
sequentially stretching the solidified composite melt in hot water and in a dry-heat oven into a solid filament;
setting the solid filament in a dry-heat oven;
winding one or more heat-set solid filaments on a spool for collection.

14. The method according to claim 13, wherein a volume ratio of the inner layer in the floss tape and the thickness of the floss tape are adjusted by adjusting pump speeds of the first extruder and the second extruder.

15. A floss roll, comprising a floss roll housing, a dental floss core bobbin disposed in the floss roll housing, and the floss tape (1) according to any one of claims 1 to 12 wound on the dental floss core bobbin.

16. A floss pick, comprising a floss pick holder, and the floss tape (1) according to any one of claims 1 to 12 connected between different ends of the floss pick holder.
